# EUROPEAN PATENT APPLICATION

(11) **EP 3 945 293 A1**
(43) Date of publication of application: **02.02.2022**
(21) Application number: 20188486.3
(22) Date of filing: 29.07.2020
(51) Int. Cl.: G01F 1/26, E03B 9/02, A62C 35/20

(54) **A SYSTEM FOR DETECTING WATER FLOW THROUGH A HYDRANT AND BLOWS TO THE HYDRANT AND THE HYDRANT PROVIDED WITH A SYSTEM TO DETECT WATER FLOW THROUGH THE HYDRANT AND BLOWS TO THE HYDRANT**

(71) Applicant: Domex sp. z o.o., 58-200 Dzierzoniow (PL)
(72) Inventor: Krawczyk, Wojciech, 58-240 Pilawa Gorna (PL); Nachyla, Dariusz, 05-520 BIelawa (PL)
(74) Representative: Pawlowska, Justyna

(57) **Abstract**

A system for detecting the medium flow through the hydrant and blows to the hydrant, containing a detector (4) with sensors, the detector (4) in the form of a powered PCB (25) with NFC communication (25), on which at least two sensors are mounted, such as a an acceleration sensor (23) and a magnetic rotation sensor (21) which are associated with a microcontroller (26) associated with at least one radio module (22, 27) and the antenna (24). The detector is enclosed in a housing (31) and the system further includes a magnet (5) that is attached under the housing (31) of the detector (4). The magnet is positioned in relation to the detector (4) so that the magnetic rotation sensor (21) detects changes in the magnetic field by changing the position of the sensor relative to the position of the magnet, and the detector is mounted in the hydrant in such a way that it is mechanically related to the movable drive opening the medium inflow.

## Description

The present invention relates to a system for detecting the opening and closing of the inflow of a medium to the hydrant which is related to the flow of the medium through the hydrant, and blows into a hydrant, containing a detector. The invention also relates to a hydrant provided with hydrant opening and closing system and opening and closing detection system of medium inflow to the hydrant, which is related to the flow of the medium through the hydrant, as well as blows on the hydrant. The solution allows you to obtain data from one or all of the hydrants about their opening, opening time or possible damage caused by hitting the hydrant. The above information may be used to determine the quantity of medium taken, e.g. water from a given hydrant, about illegal water abstraction and the amount of water, about the location of the hydrant, about damage to the hydrant as a result of hitting a hydrant (e.g. car collision with a hydrant).

Known hydrants use a drive element that controls the opening of the medium flow through the hydrant - most often a unit containing a control spindle with a trapezoidal thread cut, cooperating with a nut with a trapezoidal thread, converting the rotary motion into a straight, reciprocating motion. An actuator-drive element is also used - a mechanical system controlling the gradual opening and closing of the hydrant, i.e. a valve consisting of a piston or a ball closing a cylindrical hole, most often made in the lower body of the hydrant.

There are hydrants equipped with hydrant intervention analyzers - e.g. hydrant opening, water intake, etc.

There is a telemetric hydrant know from its description that consists of the following elements: working housing of the water supply hydrant, measuring device - sensor, logical control device - PLC, communication device, power Storage - battery and photovoltaic cells as a source of electric power and battery chargning and discharging controller. All devices except the sensor are mounted into a common housing. Apart from its function to take water, telemetric hydrant is also an energy-independent device for detection of measured quantities, such as pressure, temperature, flow, water quality, detection of opening, etc., allows collecting numerous data on the state of the water supply network.

The US20170216645 device for detecting adverse events in a hydrant, is known from its description as the device comprising a radio transmitter fixed to water meter, connected to sensors located inside the hydrant. The housing includes a controller, a transceiver, and a water sensor.

The disadvantage of the known solutions is that they have sensors installed inside the hydrant and are connected with the control system by wires, which may limit the flow of the medium through the hydrant and difficult assembly and disassembly of these sensors in the event of their damage. Another inconvenience may be the use of battery powered by photovoltaic cells, which must have access to light in order to function. Another disadvantage is the inability to install them on any overground hydrant.

The system for detecting the medium flow through the hydrant and blows on the hydrant containing a detector with sensors, is characterized in this invention in that the detector is in the form of a powered PCB with NFC communication on which at least two sensors are mounted, such as an acceleration sensor and a magnetic rotation sensor, which are associated with a microcontroller associated with at least one radio module and an antenna. The detector is enclosed in a housing. The system includes a magnet that is attached under the detector housing, while the magnet is being positioned relative to the detector so that the magnetic rotation sensor detects changes in the magnetic field by changing the position of the sensor relative to the position of the magnet, whereas the detector is mounted in the hydrant so that it is associated mechanically with a movable drive element.

The detector may also include electronic components such as a power supply, a SigFox radio module, a GSM radio module, which are also located on one PCB.

The invention also relates to a on-ground hydrant for supplying a medium, especially water, from a source, provided with an opening actuator and a medium flow shut-off, comprising in its major part a control spindle with a control knob cooperating with a cylindrical hole made in the body of the hydrant closed with the lid of the hydrant, the essence of which is that the hydrant is equipped with a system for detecting the flow of the medium through the hydrant and blows on the hydrant containing the detector described above.

The detector is mounted in a sealed housing of the detector between the fixed cover of the hydrant and the control knob concentrically to the control spindle and connected by a fastener to the control knob and the control spindle in such a way that when controlling the hydrant, the detector in the detector housing rotates together with the control knob and control spindle when opening the media supply.

The system according to the invention does not require interference with the structure of the on-ground hydrant place where the benefits are described.

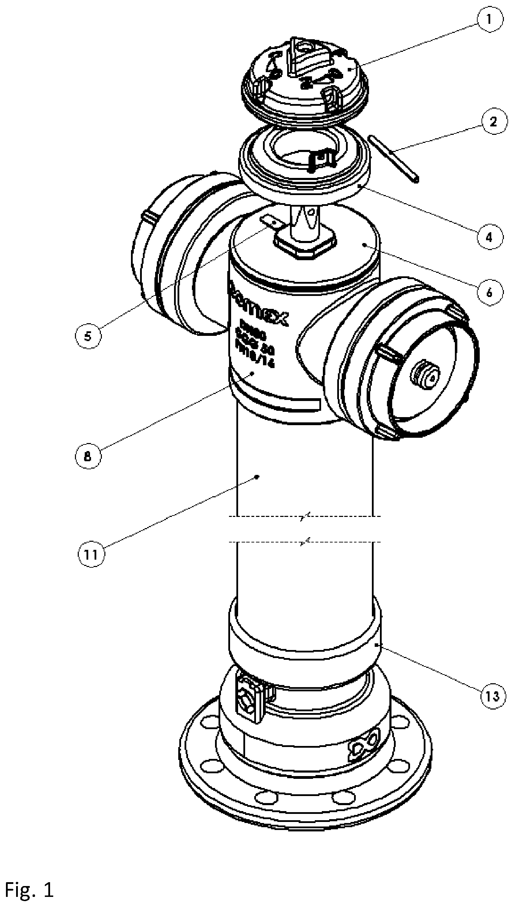

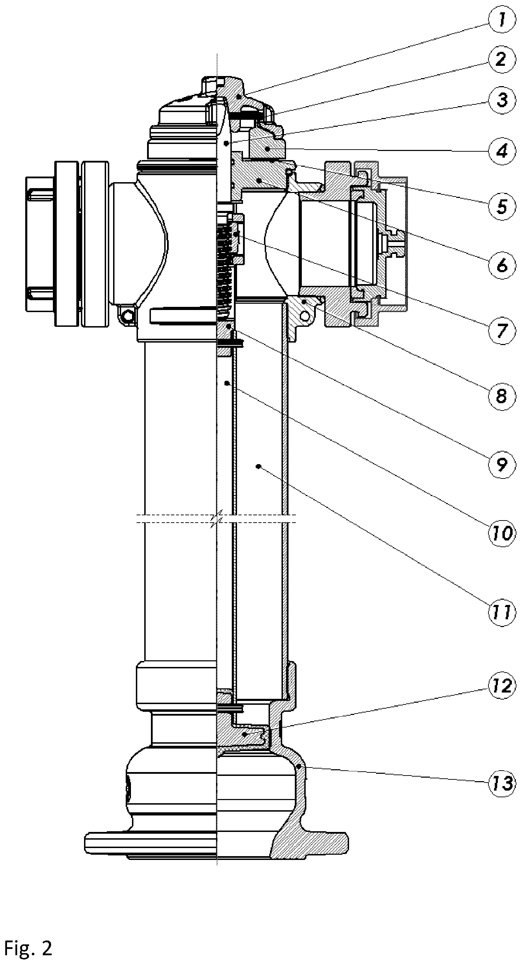

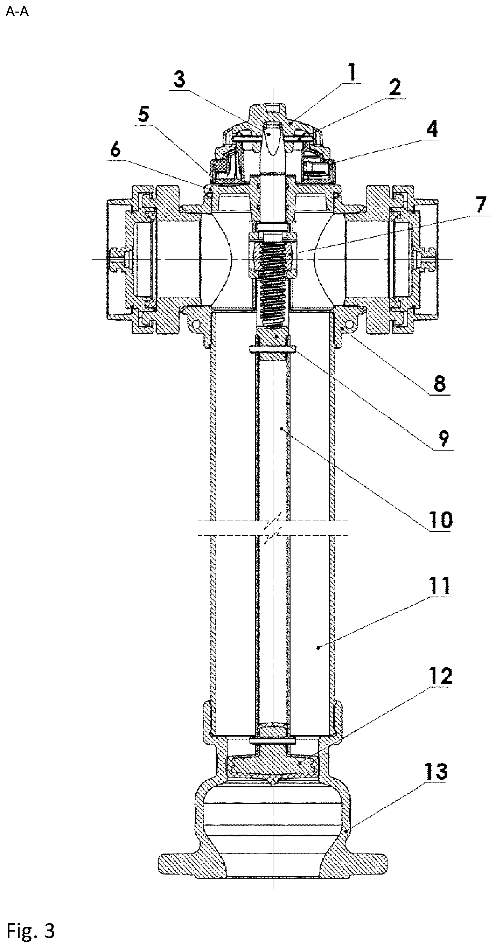

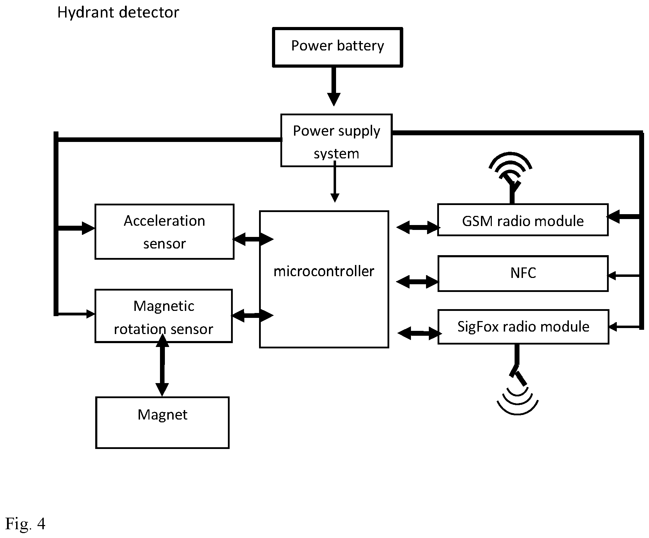

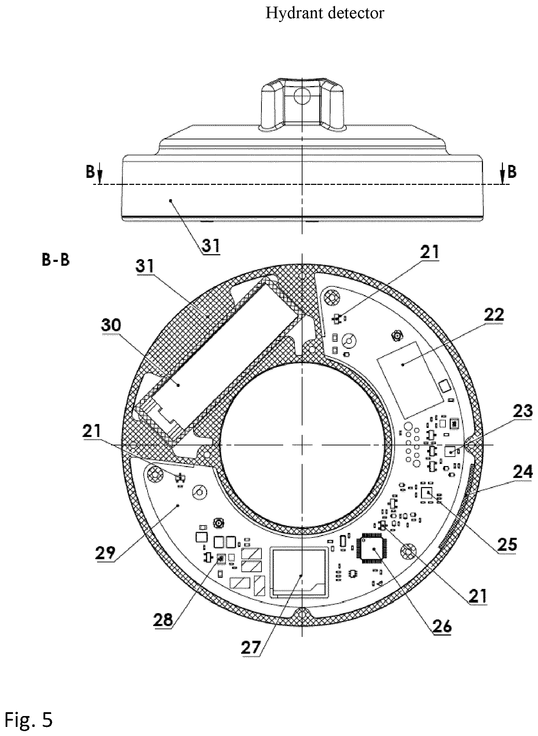

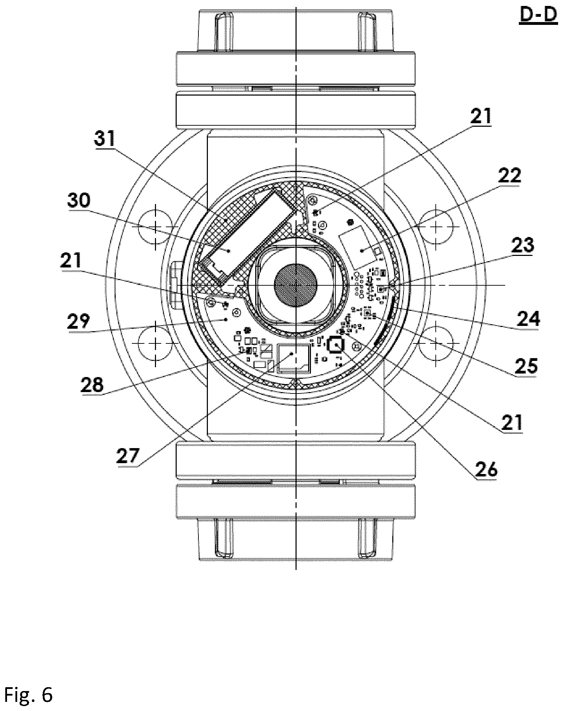

The invention is illustrated by an example in the drawing, fig. 1 shows the hydrant in an axonometric view, fig. 2 shows a half-view-half-section of the hydrant, fig. 3 shows a longitudinal section of a hydrant, fig. 4 shows a hydrant detector, fig. 5 -6 cross-section through the detector.

### List of symbols:

control knob - 1
fastening pin - 2
control spindle - 3
detector - 4
magnet - 5
hydrant cover - 6
nut - 7
upper body of the hydrant - 8
pilot - 9
section- 10
pipe - 11
a piston formed as a "mushroom" - 12
lower body of the hydrant - 13
magnetic rotation sensor - 21
SigFox -22 radio module
acceleration sensor - 23
antenna - 24
NFC - 25, NFC- near-filed communication - a short-range, high-frequency, radio communication standard that allows for wireless data exchange over a distance of up to 20 centimeters. In the detector, it is used to configure the device, transfer data via a smartphone, update the device software.
microcontroller - 26
GSM radio module - 27
power supply - 28
PCB board - 29, PCB Printed Circuid Board - a board made of insulating material with electronic connections (solder tracks and points) intended for mounting electronic components. In the detector, all electronic components are mounted on a PCB.
power battery - 30
detector housing - 31

### Example

The main structure of the overground hydrant includes a driving element - an actuator opening / closing the flow of the medium - it is a unit consisting of a control spindle 3 with a trapezoidal thread (screw with a trapezoidal thread) and a nut 7 with a trapezoidal thread cooperating with this pin. The task of this system is to change the rotary motion into a rectilinear reciprocating motion in order to control the actuator system. The actuating-drive system is a valve containing a piston 12 formed as the so-called "mushroom" and cooperating with a cylindrical hole (seat) made in the lower body 13 of the hydrant. The piston 12, by changing its position, moves away from the cylindrical bore, causing the hydrant to open and the medium to flow, or it closes the cylindrical hole, resulting in no medium (e.g. water) flow. The pilot 9 causes that the nut 7 cooperating with the control pin 3 placed in its seat does not rotate and causes the pilot to perform a rectilinear reciprocating movement. The pilot 9 transmits a rectilinear reciprocating movement to the piston 12, which controls the flow through the hydrant by means of a section 10. The section 10 is connected to the control pin 3 and the piston 12 by means of fixing pins.

According to the invention, the hydrant is equipped with a system for detecting the opening and closing of the flow of the medium to the hydrant, which is related to the flow of the medium through the hydrant, and for detecting blows on the hydrant,

The system comprises a detector 4 located in a sealed housing 31. The only element mounted outside the housing 31 included in this device is a magnet 5, which is mounted under the housing 31 on a fixed cover 6 of a hydrant connected by known methods, e.g. by means of glue.

The detector 4 in the housing 31 is coupled by means of a fastener 2 to the control pin 3 and the control knob 1. By turning the control knob 1 we set the control pin 3 and the housing 31 containing the hydrant opening / closing detector in rotation.

The control spindle 3 cooperates, by means of a thread cut on it, with a nut 7 embedded in the pilot 9 associated with the profile 10 and the piston 12, changing the rotary motion into a rectilinear reciprocating motion, causing The piston 12 to move. The piston 12 moving rectilinearly closes or opens the flow through a 6 cylindrical hole with which it in the lower body of the hydrant 13.

A cylindrical hole (seat) is made in the lower body 13, which is sealed by a piston 12 when the hydrant is closed. When the hydrant is opened, the piston moves away from the cylindrical hole (seat) and the medium (water) flows. The piston 12 with a coupled cylindrical hole made in the lower body 13 (seat) play the role of a hydrant valve and it is an actuator controlled by a control unit consisting of a control spindle 3 having a cut trapezoidal thread and a nut 7 with a trapezoidal thread cooperating with this control spindle 3 .

The rotation of the control knob 1 is detected by a magnetic rotation sensor 21 placed in the housing 31 cooperating with a neodymium magnet 5 mounted on the fixed cover of the hydrant 6, which is screwed to the upper body of the hydrant 8 and it is connected by a pipe 11 to the lower body of the hydrant 13. Housing 31 is physically connected to the control pin 3 and the control knob 1 by means of a fastener 2, which is a fastening pin 2.

After their connection, by turning the control knob 1 the control spindle 3 and the housing 31 where the hydrant detector 4 is located rotate with it. A very important feature of this solution is that the magnet 5 is mounted under the detector housing 31 on the fixed cover of the hydrant 6. The magnet 5 is mounted by means of e.g. glue, and additionally held on the metal cover of the hydrant 6 by the magnetic field generated by the magnet 5.

Above the mounted magnet 5, when turning the control knob 1, the housing 31 rotates, in which the device of the detector of the hydrant 4 is located. The stationary magnet 5 cooperates with the magnetic rotation sensor 21 placed in the housing 31 of the detector 4 of the hydrant in such a way that the magnetic rotation sensor 21 detects the alternating magnetic field of the magnet 5 when rotating the control knob 1, this information allows to determine whether the hydrant has been opened or closed (direction of rotation) and how many turns were made while controlling the hydrant.

The magnetic field is produced by a stationary magnet 5, and a magnetic rotation sensor 21 rotating above it detects this magnetic field and transmits information to a programmed microcontroller 26, which on the basis of this information is able to determine the direction and number of turns made during hydrant control. An essential role of the magnetic rotation sensor 21 is detecting the direction and number of turns performed during hydrant control on the basis of the magnetic field generated by the magnet 5, which is mounted on the fixed cover of the hydrant 6.

The detector 4 is integrated in a single housing 31 and connected to the control knob 1 and the control spindle 3 by means of a fastening pin 2.

It is important that the hydrant detector 4 is equipped with a magnetic rotation sensor 21, a SigFox radio module 22, an acceleration sensor 23, an antenna 24, NFC 25, a microcontroller 26, a GSM radio module 27, a power supply system 28, which are embedded on one printed circuit board PCB 29 and together with the power source, such as batteries 30, all components are placed in the detector housing 31. Outside the detector housing 31, a magnet 5 is mounted cooperating with a magnetic rotation sensor 21.

PCB is a Printed Circuid Board - a board made of insulating material with electronic connections (solder tracks and points) intended for the assembly of electronic components. In the detector, all electronic components are mounted on a PCB.

NFC- (near-filed communication) - a short-range, high-frequency, radio communication standard that allows for wireless data exchange up to a distance of 20 centimeters. In the detector it is used to configure the device, transfer data via a smartphone, update the de vice software.

It is essential that the hydrant detector 4 is equipped with an acceleration sensor 23 whose task is to detect events such as a hitting a hydrant or a car collision with a hydrant.

The task of the hydrant detector 4 is to continuously monitor and detect events such as opening, closing of water flow or damage to an on-ground hydrant due to a strong blow on the hydrant, which will be detected by the acceleration sensor 23. Then the data from the sensor is sent to the recipient. Continuous operation of all electronic components is ensured by a power source, which is the 30 battery.

The events taking place on the on-ground hydrant are detected by the acceleration sensor 23 and the magnetic rotation sensor 21, and the processed information by the microcontroller 26 is sent to the recipient by means of a GSM radio module 27 or a SigFox radio module 26 and an antenna 24 cooperating with them. The radio module transmits the data to the receiver via the antenna 24.

All detected events such as opening, closing or damage of an on-ground hydrant as well as the location of this hydrant are sent to the recipient via the radio network.

Hydrant detector 4 does not receive information from external sensors mounted inside the hydrant, as is often used in other Solutions, but from the mechanical system controlling the hydrant on which the detector 4 is mounted in such a way that it rotates together with the control knob 1 and the control spindle 3 above a fixed magnet 5 that generates a magnetic field against which the detector 4 determines by means of a magnetic rotation sensor 21 the number of rotations and their direction during hydrant control. The sensors are mounted inside the detector. The magnetic rotation sensor 21 transmits information to the programmable microcontroller 26 on the basis of the detected magnetic field generated by the magnet 5 and on their basis [uncertainty: on its basis?] the direction and number of rotations are determined.

The important thing is the location of the detector 4, which is mounted on the control pin 3, so that each rotation of the control system causes the detector 4 to rotate, and with it the magnetic rotation sensor 21 located inside the detector housing 31, which detects each rotation relative to the fixed magnet 5 permanently mounted on the fixed cover of the hydrant 6.

The magnetic rotation sensor 21 rotating during opening or closing of the hydrant detects and determines the direction and number of rotations in relation to the magnetic field
acting on it, produced by a fixed magnet 5, which is mounted on the fixed cover 6 of the hydrant. Information about the detected rotation is transmitted to the microcontroller 26 via the magnetic rotation sensor 21 and from there via the SigFox radio module 22 or the GSM radio module 27 and antennas 24 to the receiver.

The user can choose whether he will receive information via the Sigfox network or GSM.

The user can choose whether he will communicate with the device via the Sigfox network or GSM. The device is adapted to communicate with the user via the GSM radio network and the Sigfox radio network. The user will receive information via a special application installed on a computer or smartphone.

A very important feature of the detector 4 is the detection of events such as a strong blow to the hydrant on a multistage scale, on the basis of this type of information it can be determined whether the hydrant was damaged, e.g. when being hit by a car.

Detection of blows by detector 4 is performed by an acceleration sensor 23 mounted on PCB 29 in detector housing 31 which, after detecting an impact, transmits information to the microcontroller 26, and from there via SigFox 22 radio module or GSM radio module 27 and antennas 24 to the receiver.

It is important that the detector 4 of the opening / closing of the hydrant closed in one sealed housing 31 and serves to detect and count the number of rotations and determine the direction of these rotations during the opening or closing of the medium flow through the hydrant, which is directly related to the degree of opening of the hydrant, and to detect its damage as a result of hitting a hydrant.

The entire detector system 4 is housed inside the housing 31, except for the magnet 5, which is permanently mounted on the fixed cover 6 of the hydrant.

The magnet 5 is an essential element of the system and it cooperates with the detector 4 by means of a magnetic rotation sensor 21.

The magnet 5 is permanently attached to the hydrant cover 6 under the housing 31 of the detector 4. Its positioning is important because its magnetic field is reacted to by the magnetic rotation sensor 21 of the detector 4 placed in the housing 31. The magnet 5 and the magnetic field generated by it is the reference point according to which magnetic sensor of rotation 21 may be positioned to define the displacement and the direction and number of rotations when the opening or closing of the hydrant occurs.

A very important feature of this device is the place and method of mounting the detector 4, which does not require interference with the hydrant's structure and installation of additional sensors inside the hydrant, as is the case in other known Solutions.

Moreover, the detector 4 can be mounted on hydrants which have already been installed in the water mains.

It has been found that the best results are achieved by mounting the detector 4 together with all components in one housing 31 for [uncertain preposition] the control pin 3 of the hydrant and coupling with it by means of a fastener, such as a fastening pin 2, in such a way that the control pin 3 of the hydrant will rotate with the applied housing 31 in which a hydrant detector 4 is located.

Each opening / closing of the hydrant is performed by the rotation of the control knob 1 mounted on the control pin 3 and the housing 31 coupled to it, in which the detector 4 is located.

Each detected rotation of the control knob 1 and the control spindle 3 causes the movement of the piston 12 controlling the degree of opening of the hydrant, and hence the amount of medium flowing through, from closing to complete opening. The detector 4 located in the housing 31 is mounted on the hydrant between the hydrant cover 6 and the control knob 1 mounted on the control spindle 3. When turning the knob 1, the control spindle 3 and the entire detector 4 located in the housing 31 rotate with it causing that the rotation movement of the control spindle 3, on which the trapezoidal thread is cut and the nut 7 cooperating with it, is transformed into a rectilinear reciprocating movement causing the piston 12 to move in relation to the coupled cylindrical hole made in the lower body 13, which results in the opening or closing of the flow of medium (water) through hydrant. When the hydrant is closed, the piston 12 seals the cylindrical hole, whereas when the hydrant is open, the piston 12 is distant from the cylindrical hole and the medium (water) flows freely through the hydrant.

Detection of rotation by the detector 4 takes place by means of a magnetic rotation sensor placed in the housing 31, which responds to the magnetic field of the magnet 5 permanently placed in the hydrant cover 6 and transmits this information to the microcontroller 26, and the microcontroller 26 manages the collected data, including the device location, and transmits it to the recipient via the Sigfox 22 radio module or the GSM 27 radio module .

Information about the location of the hydrant is assigned to the detector 4 after its final installation by the installer and such information is communicated to the recipient via the Sigfox and / or GSM radio network.

After mounting the housing 31, which houses the detector 4, and the magnet 5 on the hydrant cover 6, the device is ready for operation and detects every turn needed to start the hydrant, determines the direction and number of tums, and detects impacts on the hydrant by means of the acceleration sensor 23 located in the housing 31. All occurring events such as detection of opening / closing, number of opening / closing rotations or hitting the hydrant and location of the hydrant are transmitted to the recipient via the Sigfox or GSM network.

The recipient obtains information from one or all hydrants belonging to him equipped with hydrant detector 4 about their opening / closing, opening / closing time or possible damage by hitting the hydrant. The above information may be used to determine the amount of water taken from a given hydrant, about illegal water abstraction and the amount of this water, about the location of a given hydrant, about damage to the hydrant as a result of hitting a hydrant (e.g. car collision with a hydrant, devastation).

The advantage is that such an assembly method consisting in placing the detector 4 on the control pin 3 and placing it between the hydrant cover 6 and the control knob 1 and connecting with a fastening pin 2, allows the detector 4 to be mounted on on-ground hydrants previously installed on the water supply network without interfering with the interior of the overground hydrant and structural elements of the overground hydrant on which the detector 4 is installed.

## Claims

1. System for detecting medium flow through the hydrant and blows to the hydrant, comprising a detector (4) with sensors, **characterized in that**, the detector (4) is in the form of a powered PCB (25) with NFC communication (25), on which at least two sensors, such as an acceleration sensor (23) and a magnetic rotation sensor (21), which are associated with a microcontroller (26) associated with at least one radio module (22, 27) and an antenna (24), the detector being enclosed in a housing (31), and the system further includes a magnet (5) that is attached under the housing (31) of the detector (4), and the magnet is positioned relative to the detector (4) so that the magnetic rotation sensor (21) detects changes in the magnetic field by changing the position of the sensor in relation to the position of the magnet, and the detector is mounted in the hydrant in such a way that it is mechanically related to the movable drive element that opens the flow of the medium.

2. The system according to the claim 1, wherein the detector (4) comprises a power supply (28), a SigFox radio module (22), a GSM radio module (27).

3. On-ground hydrant for supplying the medium, especialy water, from the source, equipped with a driving element for opening and closing the medium inflow, containing mainly a control pin (3) with a control knob (1) cooperating with a cylindrical hole made in the hydrant body (13) closed with a hydrant cover (6), and the hydrant is equipped with a system for detecting the medium flow through the hydrant and impacts on the hydrant, comprising a detector (4) for detecting the opening and closing of the medium flow to the hydrant, **characterized in that** the detector (4) is in the form of a powered PCB (25) with NFC communication (25), on which are embedded at least two sensors, such as an acceleration sensor (23) and a magnetic rotation sensor (21), which are associated with a microcontroller (26) associated with at least one radio module (22, 27) and an antenna (24), the detector is closed in the housing (31), and the system for detecting the flow of medium through the hydrant and impacts on the hydrant includes a magnet (5) that is attached under the housing (31) of the detector (4). [uncertainty: end of the sentence] the magnet is positioned in relation to the detector (4) so that the magnetic rotation sensor (21) detects changes in the magnetic field by changing the position of the sensor relative to the position of the magnet, and the detector in the housing (31) is coupled by means of the fastener (2) with the control spindle (3) and the control knob (1) in such a way that the control spindle (2) is rotated by turning the control knob (1) and the housing (31) with the detector (4) and the magnet (5) is permanently mounted on the hydrant cover (6) under the casing (31) and is positioned in relation to the detector (4) is such a way that the magnetic sensor detects changes in the magnetic field by changing the position of the magnetic rotation sensor (21) in relation to the position of the magnet (5).

4. The hydrant according to claim 3, wherein the detector (4) is mounted in a sealed detector housing (31) between the fixed hydrant cover (6) and the control knob (1) concentrically to the control spindle (3) and connected by a fastening pin (2) to the the control knob (1) and the control spindle (3) in such a way that when controlling the hydrant, the detector (4) located in the detector housing (31) rotates together with the control knob (1)and the control spindle (3) above the fixed cover of the hydrant (6) on which a magnet (5) is permanently mounted, which is a reference source for the magnetic rotation sensor (21) mounted together with other components in the detector housing (31).

5. The hydrant according to claim 3, wherein the detector (4) is mounted on the control spindle (3) between the fixed cover (6) and the control knob (1) concentrically to the control spindle (3) and connected by a fixing pin (2) to the control knob (1) and the control spindle (3).
